# EUROPÄISCHE PATENTSCHRIFT

(11) **EP 2 096 302 B1**
(45) Veröffentlichungstag und Bekanntmachung des Hinweises auf die Patenterteilung: **27.01.2016**
(21) Anmeldenummer: 09001056.2
(22) Anmeldetag: 27.01.2009
(51) Int. Cl.: F03D 7/02

(54) **Regler für einen Blatteinstellwinkel mindestens eines Rotorblatts einer Windenergieanlage**
Regulator for a blade configuration angle of at least one rotor blade of a wind energy assembly
Régulateur pour angle de réglage de pale d'au moins une pale de rotor d'une éolienne

(30) Priorität: 26.02.2008 DE 102008011139
(43) Veröffentlichungstag der Anmeldung: 02.09.2009
(73) Patentinhaber: Nordex Energy GmbH, 22419 Hamburg (DE)
(72) Erfinder: Kabatzke, Wolfgang, 21502 Geesthacht (DE)
(74) Vertreter: Hauck Patentanwaltspartnerschaft mbB

(56) Entgegenhaltungen:
- DE-A1- 3 118 259
- GB-A- 2 023 237
- US-A1- 2003 151 259
- US-A1- 2004 094 964
- BOSSANYI E A: "The Design of Closed Loop Controllers forWind Turbines", WIND ENERGY, WILEY, Bd. 3, Nr. 3, 1. Januar 2000 (2000-01-01), Seiten 149-163, XP007908706, ISSN: 1095-4244, DOI: DOI:10.1002/WE.34 [gefunden am 2001-07-19]

## Beschreibung

Die vorliegende Erfindung betrifft einen Regler für einen Blatteinstellwinkel mindestens eines Rotorblatts einer Windenergieanlage.

Windenergieanlagen mit einer Regelung des Blatteinstellwinkels sind bekannt. Die Regelung des Blatteinstellwinkels erlaubt es, Leistungs- und Drehmomentschwankungen der Windenergieanlage auszugleichen. Die Effektivität in Bezug auf den Abbau von Belastungsspitzen hängt entscheidend von der Reaktionszeit der Regelung ab, d.h. von der Blattverstellgeschwindigkeit. Wegen der Trägheit der zu bewegenden Masse und weil eine Überlastung der Stellglieder vermieden werden soll, ist die Blatteinstellwinkelregelung nicht in der Lage, auf kurzzeitige Fluktuationen der Windgeschwindigkeit zu reagieren (vgl. Erich Hau, Windkraftanlagen, 3. Auflage, Springer Verlag, Kapitel 6.3).

Mit den Anforderungen an die Windenergieanlage bei immer größer werdenden Rotorblattdurchmessern lassen sich die bisherigen Pitch-Regelungsansätze nicht länger verwenden. Die Regelung wird zunehmend träger, so dass bei großen Rotorblattdurchmessern von zukünftigen Windenergieanlagen Leistungs- und Drehmomentschwankungen nicht effektiv ausgeregelt werden können.

Aus GB 2 023 237 A ist eine Generatorsteuerung für eine Windenergieanlage bekannt geworden. Bei dieser Steuerung wird der Pitchwinkel eines Rotorblatts, abhängig von den Betriebsgrößen der Windenergieanlage, geregelt. Hierzu sind verschiedene Regleräste vorgesehen, die wahlweise über einen Most Select-Schaltkreis 98 und einen Least Select-Schaltkreis 122 ausgewählt werden. Ferner ist zur Steuerung des Pitchwinkels ein Schalter 144 vorgesehen, der, abhängig von einem vorgegebenen Referenzsignal, schaltet.

Aus US 2004/0094964 A1 ist die Steuerung der Windenergieanlage mit variabler Geschwindigkeit bekannt geworden. Die Pitchregelung regelt hierbei den Pitchwinkel, abhängig von einem Sollwert für die Drehzahl und einer am Rotor gemessenen Drehzahl.

Der Erfindung liegt die Aufgabe zugrunde, einen Regler für den Blatteinstellwinkel von mindestens einem Rotorblatt bereitzustellen, der eine effektive Regelung bei großem Rotorblattdurchmesser ohne Überlastung der Stellglieder erlaubt und gleichzeitig auch bei Windenergieanlagen mit kleinerem Rotorblattdurchmesser eingesetzt werden kann.

Erfindungsgemäß wird die Aufgabe durch einen Regler mit den Merkmalen aus Anspruch 1 gelöst. Vorteilhafte Ausgestaltungen bilden die Gegenstände der Unteransprüche.

Der erfindungsgemäße Regler dient zur Regelung eines Blatteinstellwinkels für mindestens ein Rotorblatt einer Windenergieanlage. Gelegentlich wird dieser Regler auch als Blatteinstellwinkelregler oder kurz als Pitch-Regler bezeichnet. Bei dem erfindungsgemäßen Regler erfolgt eine Regelung, bei der abhängig von einem Betriebszustand der Windenergieanlage ein erster Reglerast zur Bestimmung des Blatteinstellwinkels zugeschaltet wird. Mit dem zuschaltbaren Reglerast kann der erfindungsgemäße Regler des Blatteinstellwinkels abhängig von einem Betriebszustand der Windenergieanlage zwei unterschiedliche Regelungsverfahren für die Sollwertbestimmung des Blatteinstellwinkels vornehmen. Erfindungsgemäß ist in dem ersten Reglerast mindestens ein Differenzierglied vorgesehen, was eine schnelle und dynamische Regelung auch bei großem Rotorblattdurchmesser erlaubt. Durch die Zuschaltung des ersten Reglerastes mit seinem mindestens einen Differenzierglied besteht abhängig von dem Betriebszustand die Möglichkeit, das Reglerverhalten zu verändern. Ein vorbestimmter zweiter Umschaltwert für die Generator- und/oder Rotordrehzahl ist erfindungsgemäß bei dem Regler vorgegeben. Der vorbestimmte zweite Umschaltwert wird mit einem Istwert für die Generator- und/oder Rotordrehzahl verglichen. Wenn der Istwert für Generator- und/oder Rotordrehzahl größer als der vorbestimmte zweite Umschaltwert ist, wird der erste Reglerast zu dem zweiten und dritten Reglerast zugeschaltet. Das Zuschalten kann beinhalten, dass einer oder beide zuvor verwendeten Regleräste nicht länger verwendet werden. Der besondere Vorteil bei dem erfindungsgemäßen Regler besteht ferner darin, dass dieser sowohl bei Windenergieanlagen mit kleinerem Rotorblattdurchmesser als auch durch geeignete Wahl des Betriebszustandes, der ein Umschalten auslöst, bei Windenergieanlagen mit einem großen Rotorblattdurchmesser eingesetzt werden kann.

Bei einer bevorzugten Ausgestaltung des erfindungsgemäßen Reglers erfolgt in einem ersten Betriebszustand eine Regelung des Blatteinstellwinkels über einen zweiten und einen dritten Reglerast. Bevorzugt ist der erste Betriebszustand als ein Teillastbetrieb der Windenergieanlage definiert. Im Teillastbetrieb der Windenergieanlage arbeitet diese nicht mit der Nennleistung, sondern wird mit einem niedrigeren Leistungswert betrieben.

In einer bevorzugten Ausgestaltung des erfindungsgemäßen Reglers liegt ein erster vorbestimmter Umschaltwert für eine Generator- und/oder Rotordrehzahl vor. Ein gemessener Istwert für die Generator- und/oder Rotordrehzahl wird mit dem ersten vorbestimmten Umschaltwert verglichen. Ist der Istwert kleiner als der Umschaltwert, so arbeitet der erfindungsgemäße Regler mit dem zweiten und dritten Reglerast. Bei der bevorzugten Ausgestaltung des erfindungsgemäßen Reglers erfolgt für Drehzahl werte kleiner als der erste Umschaltwert eine Regelung ausschließlich über den zweiten und dritten Reglerast. Im Bereich der geringen Drehzahlen kann dann über den zweiten und dritten Reglerast eine Regelung in an sich bekannter Weise erfolgen. Dieser Ausgestaltung der Erfindung liegt die Erkenntnis zugrunde, dass bei großen Drehzahlen eine schnellere dynamischere Regelung des Blatteinstellwinkels möglich ist als bei niedrigen Drehzahlen, bei denen ein zu häufiges Nachregeln des Pitchwinkels unerwünscht ist. Ferner ermöglicht die Umschaltung abhängig von einem Umschaltwert für die Generator- und/oder Rotordrehzahl, die bisher eingesetzten und an die Windenergieanlagen angepassten Regler auch in Windenergieanlagen mit großem Rotorblattdurchmesser einzusetzen, die für große Drehzahlen eine dynamische Regelung erforderlich machen. Der vorbestimmte erste und zweite Umschaltwert können den gleichen Wert besitzen.

Bei dem erfindungsgemäßen Regler erfolgt eine Regelung des Blatteinstellwinkels zusätzlich über den ersten Reglerast, wenn ein zweiter Betriebszustand festgestellt wird. Bevorzugt liegt der zweite Betriebszustand im Volllastbetrieb der Windenergieanlage vor. Auch kann der zweite Betriebszustand zusätzlich für einen Übergangsbereich vom Teillastbetrieb in den Volllastbetrieb vorliegen.

In einer besonders bevorzugten Ausgestaltung ist in dem zweiten Reglerast ein auf Triebstrangschwingungen abgestimmter Proportionalfilter vorgesehen. Der Proportionalfilter unterdrückt die Schwingungen in dem Triebstrang, d.h. in der Rotorwelle, einem Getriebe und eventuell in einer Kupplung hervorgerufene Schwankungen in der Drehzahl. Die Signale des zweiten Reglerastes liegen bevorzugt zusätzlich zu den Signalen des dritten Reglerastes am Ausgang des Reglers an.

Der dritte Reglerast, der bevorzugt unabhängig von den Betriebszuständen der Windenergieanlage stets im Einsatz ist, besitzt ein Integrationsglied, mit dem die am Regler anliegende Regelungsdifferenz aufintegriert wird.

Der erfindungsgemäße Regler wird nachfolgend an einer Figur näher erläutert.

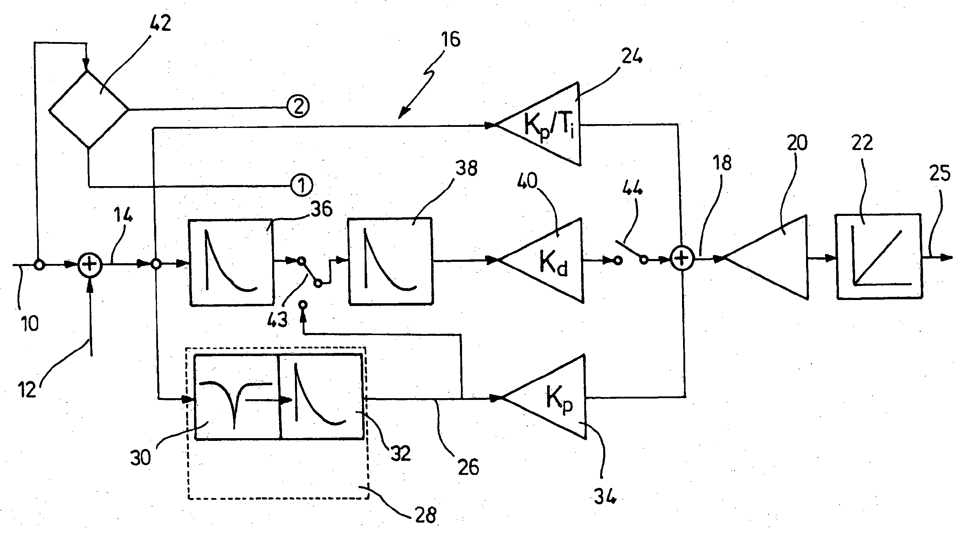

Die Figur zeigt in einer schematischen Ansicht den Aufbau des Pitch-Reglers, an dem ein Istwert 10 der Generatordrehzahl anliegt. Von dem Istwert der Generatordrehzahl wird der Sollwert 12 der Generatordrehzahl subtrahiert, um die Regeldifferenz 14 zu bilden. Die Regeldifferenz 14 liegt an dem Regler 16 an. Das Signal am Reglerausgang 18 wird über eine proportionale Verstärkung 20 und ein Kennfeld 22 in eine Ausgangsgröße 25 des Blatteinstellwinkels umgerechnet. Abhängig von der umgerechneten Ausgangsgröße 25 erfolgt eine Verstellung des Blatteinstellwinkels.

Der Regler 16 besitzt ein Integrierglied 24, das unabhängig vom Betriebszustand der Windenergieanlage die Signale integrierend verstärkt. In einem zweiten Reglerast 26 werden die anliegenden Signale durch einen Proportionalfilter 28 gefiltert. Der Proportionalfilter 28 setzt sich zusammen aus einer Bandsperre 30 und einem Differenzierglied 32. Die Bandsperre 30 ist so ausgelegt, dass Schwingungen im Triebstrang unterdrückt werden, bevor sie an das Differenzierglied 32 weitergeleitet werden. Nachfolgend werden die Signale über ein Proportionalglied 34 verstärkt und dem Ausgang des Reglers zugeführt.

Mittig in dem dargestellten Regler ist der erste Reglerast zu erkennen. Der erste Reglerast besitzt zwei hintereinander geschaltete Differenzierglieder 36 und 38 sowie ein Proportionalglied 40. Zwischen den Differenziergliedern 36 und 38 kann ein Schalter 43 vorgesehen sein, der abhängig von dem Istwert der Generatordrehzahl schaltet. Eine Abfrage des Schwellwertes 42 prüft für das Umschalten, ob der Istwert der Generatordrehzahl größer als ein vorbestimmter Schwellwert ist. Ergibt die Prüfung, dass der Istwert kleiner als der Schwellwert ist, so werden Differenzierglieder 36 und 38 durch den Schalter 43 miteinander verbunden. Ist der Istwert der Generatordrehzahl dagegen größer als der Schwellwert wird das Differenzierglied 38 mit dem Ausgang des Proportionalfilters 28 verbunden.

Ferner ist in dem zweiten Reglerast ein zweiter Schalter 44 vorgesehen, der es erlaubt, im Produktionsbetrieb den ersten Reglerast mit dem Reglerausgang 18 zu verbinden.

Bei dem Einsatz des erfindungsgemäßen Reglers läuft folgendes Verfahren ab:
Die Windenergieanlage arbeitet ständig mit geöffnetem Schalter 44, d.h. es liegt die Nutzung von Rotorblättern mit normaler Rotorblattlänge vor. Der gesamte Betrieb der Windenergieanlage erfolgt ständig über den dritten Reglerast (das Integrierglied 24) und den zweiten Reglerast 26. Aufgrund des Proportionalfilters 28 ist der Regler unempfindlich gegenüber Schwingungen des Triebstranges. Gleichzeitig sind Zeitkonstanten des Differenziergliedes 32 so gewählt, dass eine träge Regelung erfolgt. Der Schalter 43 ist in dieser Betriebsart ohne Wirkung.

Die Windenergieanlage arbeitet mit geschlossenem Schalter 44, d.h. es liegt die Nutzung von Rotorblättern mit großer Rotorblattlänge vor. Liegt der Istwert 10 der Generatordrehzahl unterhalb des vorbestimmten Schwellwertes 42, wird der Ausgang des ersten Differenziergliedes 36 über den Schalter 43 geführt und der erste Reglerast mit den Differenziergliedern 36, 38 trägt zum Reglerergebnis bei. Der zweite Reglerast 26 liefert in diesem Zustand ebenfalls ein Ergebnis über den Reglerausgang 18. Die hintereinander geschalteten Differenzierglieder 36, 38 erlauben es, Zeitkonstanten zu wählen, die eine schnelle Regelung erlauben, insbesondere für ein Aufschalten der Windenergieanlage auf das Netz, bei der die Regelung der Drehzahl ausschließlich über den Pitchregler erfolgt. Da der erste Reglerast unabhängig ist von den gefilterten Werten des Proportionalfilters 28, erfolgt hier eine direkte Regelung, die in diesem Arbeitsbereich ein zuverlässiges und schnelles Ausgleichen von Schwankungen der Generatordrehzahl gestattet.

Die Windenergieanlage arbeitet mit geschlossenem Schalter 44, wenn die Windenergieanlage mit Rotorblättern mit großer Rotorblattlänge ausgestattet ist. Befindet sich der Istwert 10 der Generatordrehzahl oberhalb des Schwellwertes 42, so liegt Produktionsbetrieb vor und die Signalverarbeitung erfolgt über das Integrierglied 24 und den zweiten Reglerast 26. Aufgrund des Proportionalfilters 28 ist der zweite Reglerast unempfindlich gegenüber Schwingungen des Triebstranges. Gleichzeitig sind Zeitkonstanten des Differenziergliedes 32 so gewählt, dass eine träge Regelung erfolgt. Der Schalter 43 verbindet den Ausgang des Proportionalfilters 28 mit dem Eingang des Differenziergliedes 38 und die Ausgangssignale des Proportionalfilters 28 liegen über das Differenzierglied 38 und das Proportionalglied 40 am Ausgang 18 des Reglers an. Das zusätzliche Differenzierglied 38 erlaubt es nun, eine Zeitkonstante vorzugeben, die ein schnelles Reagieren des Reglers auf die anliegenden Signale erlaubt. Dabei werden die Einflüsse der Triebstrangschwingung abgemildert. Damit bleibt aber die Regelung abhängig von den gefilterten Werten des Proportionalfilters 28.

## Patentansprüche

1. Regler für einen Blatteinstellwinkel für mindestens ein Rotorblatt einer Windenergieanlage, bei dem ein mindestens ein Differenzierglied aufweisender erster Reglerast zur Bestimmung des Blatteinstellwinkels zugeschaltet wird, wenn ein Istwert für eine Generator- und/oder Rotordrehzahl größer als ein vorbestimmter zweiter Umschaltwert ist.

2. Regler nach Anspruch 1, **dadurch gekennzeichnet, dass** in einem Teillastbetrieb der Windenergieanlage eine Regelung des Blatteinstellwinkels über einen zweiten und einen dritten Reglerast (26, 16) erfolgt.

3. Regler nach einem der Ansprüche 1 oder 2, **dadurch gekennzeichnet, dass** ein vorbestimmter erster Umschaltwert für die Generator- und/oder Rotordrehzahl vorliegt und bei einem Istwert für die Generator- und/oder Rotordrehzahl kleiner als der vorbestimmte erste Umschaltwert in den Teillastbetrieb der Windenergieanlage geschaltet wird.

4. Regler nach einem der Ansprüche 1 bis 3, **dadurch gekennzeichnet, dass** eine Regelung des Blatteinstellwinkels zusätzlich über den ersten Reglerast erfolgt, wenn ein Vollastbetrieb der Windenergieanlage vorliegt.

5. Regler nach Anspruch 4, **dadurch gekennzeichnet, dass** eine Regelung des Blatteinstellwinkels zusätzlich über den ersten Reglerast erfolgt, wenn ein Übergang vom Teillastbetrieb in den Volllastbetrieb vorliegt.

6. Regler nach einem der Ansprüche 2 bis 5, **dadurch gekennzeichnet, dass** in dem zweiten Reglerast ein auf Triebstrangschwingungen abgestimmter Proportionalfilter (28) vorgesehen ist.

7. Regler nach einem der Ansprüche 2 bis 6, **dadurch gekennzeichnet, dass** in dem dritten Reglerast ein Integrationsglied vorgesehen ist.

## Claims

1. Controller for a blade adjustment angle for at least one rotor blade of a wind turbine, in which a first controller branch having at least one differentiating member is switched for the determination of the blade adjustment angle, when an actual value for a generator and/or rotor speed is greater than a predetermined second switch-over value.

2. Controller according to claim 1, wherein in a partial load mode of the wind turbine a control of the blade adjustment angle takes place via a second and a third controller branch (26, 16).

3. Controller according to one of claims 1 or 2, wherein a predetermined first switch-over value for the generator and/or rotor speed is present and is switched to the partial load mode of the wind turbine in the case of an actual value for the generator and/or rotor speed less than the predetermined first switch-over value.

4. Controller according to one of claims 1 to 3, wherein a control of the blade adjustment angle takes place additionally via the first controller branch, when a full load mode of the wind turbine is present.

5. Controller according to claim 4, wherein a control of the blade adjustment angle takes place additionally via the first controller branch, when a transition from full load mode to partial load mode is present.

6. Controller according to one of claims 2 to 5, wherein a proportional filter (28) coordinated with power train oscillations is provided in the second controller branch.

7. Controller according to one of claims 2 to 6, wherein an integration member is provided in the third controller branch.

## Revendications

1. Régulateur pour un pas de pale pour au moins une pale du rotor d'une éolienne, dans lequel une première branche de régulateur pour la détermination du pas de pale comportant au moins un élément de différenciation est activée quand une valeur réelle pour une vitesse de rotation du générateur et/ou du rotor est plus grande qu'une deuxième valeur de bascule prédéterminée.

2. Régulateur selon la revendication 1, **caractérisé en ce que** dans un fonctionnement à charge partielle de l'éolienne, une régulation du pas de pale a lieu moyennant une deuxième et une troisième branche de régulateur (26, 16).

3. Régulateur selon l'une quelconque des revendications 1 ou 2, **caractérisé en ce qu'**une première valeur de bascule prédéterminée pour la vitesse de rotation du générateur et/ou du rotor existe, et que chez une valeur réelle pour la vitesse de rotation du générateur et/ou du rotor plus petite que la première valeur de bascule prédéterminée, le fonctionnement à charge partielle de l'éolienne est activé.

4. Régulateur selon l'une quelconque des revendications 1 à 3, **caractérisé en ce qu'**une régulation du pas de pale par la première branche de régulateur a lieu de manière supplémentaire quand il y a un fonctionnement à charge pleine de l'éolienne.

5. Régulateur selon la revendication 4, **caractérisé en ce qu'**une régulation du pas de pale par la première branche de régulateur a lieu de manière supplémentaire quand il y a une transition du fonctionnement à charge partielle au fonctionnement à charge pleine.

6. Régulateur selon l'une quelconque des revendications 2 à 5, **caractérisé en ce qu'**un filtre proportionnel (28) accordé aux vibrations de la ligne d'entraînement est prévu dans la deuxième branche de régulateur.

7. Régulateur selon l'une quelconque des revendications 2 à 6, **caractérisé en ce qu'**un élément d'intégration est prévu dans la troisième branche de régulateur.
